# EUROPÄISCHE PATENTSCHRIFT

(11) **EP 0 446 456 B1**
(45) Veröffentlichungstag und Bekanntmachung des Hinweises auf die Patenterteilung: **14.06.1995**
(21) Anmeldenummer: 90124410.3
(22) Anmeldetag: 17.12.1990
(51) Int. Cl.: B23D 49/16, B23D 51/02, B23D 51/20

(54) **Pendelhubsäge**
Sabre saw with reciprocating and oscillating movement
Scie scanteuse avec mouvement alternatif et oscillant

(30) Priorität: 24.01.1990 DE 4001996
(43) Veröffentlichungstag der Anmeldung: 18.09.1991
(73) Patentinhaber: SCINTILLA AG, CH-4500 Solothurn (CH)
(72) Erfinder: Kaiser, Hans, CH-3297 Leuzigen (CH)
(74) Vertreter: Voss, Klaus, Dipl.-Ing.

(56) Entgegenhaltungen:
- DE-A- 2 613 092
- DE-A- 3 222 120
- DE-A- 3 702 670
- US-A- 3 095 748
- US-A- 3 206 989
- US-A- 3 890 708
- US-A- 3 978 862

## Beschreibung

Die Erfindung geht aus von einer Pendelhubsäge nach der Gattung des Anspruchs 1.

Durch die DE-A-34 08 847 ist eine gattungsgemäße Stichsäge bekannt. Deren unteres Hubstangenlager ist elastisch gelagert und kann somit der Pendelbewegung der Hubstange folgen.

Das elastische Widerlager unterliegt dabei hohem Verschleiß. Ein weiterer Nachteil ist, daß sich die Hubstange mit dem Sägeblatt nicht nur parallel, sondern auch unkontrolliert quer zur Pendelebene bewegen kann. Dabei treten am unteren Hubstangenlager Resonanzen auf, die der Pendelbewegung entgegengerichtet sind und den Pendelhub verkleinern. Hiermit wird der mit der zusätzlichen Pendelbewegung angestrebte Vorteil weitgehend zunichte gemacht. Die mit dem Pendelhub bezweckte Arbeitserleichterung und mögliche höhere Arbeitsqualität werden nur bedingt erreicht.

Bei einer weiteren, bekannten Pendelstichsäge sitzt das untere Hubstangenlager unbewegbar im Maschinengehäuse. Damit die Hubstange dennoch pendeln kann, ist der Bohrungsdurchmesser des unteren Hubstangenlagers größer als der Durchmesser der Hubstange. Dies erlaubt neben dem erwünschten Längsspiel allerdings auch ein unerwünschtes Querspiel der Hubstange mit der Wirkung, daß die höchste Querauslenkung genauso groß sein kann wie der größte Pendelhub. Dadurch entsteht ein breiterer Schnittkanal als bei Stichsägen ohne Pendelhub. Dies hat einen verringerten Wirkungsgrad und einen höheren Energiebedarf zur Folge.

### Vorteile der Erfindung

Die erfindungsgemäße Pendelhubsäge mit den kennzeichnenden Merkmalen des Anspruchs 1 hat demgegenüber den Vorteil, daß die Hubstange eine exakt gerichtete, gleichbleibende Pendelbewegung während der Hubbewegung durchführt, womit die erreichbare Arbeitsqualität wesentlich erhöht wird. Das Widerlager des Hubstangenlagers ist unempfindlich gegen Verschleiß.

Weitere, vorteilhafte Ausgestaltungen der Erfindung ergeben sich aus den Merkmalen der Unteransprüche.

### Zeichnung

Ein Ausführungsbeispiel der Erfindung ist in der nachfolgenden Beschreibung anhand der zugehörigen Zeichnung näher erläutert.

Es zeigen die Figur 1 ausschnittsweise den Bereich der Hubstangenlagerung einer Pendelhubsäge, die Figuren 2 und 3 je eine Ansicht eines einzelnen unteren Hubstangenlagers und die Figuren 4 und 5 einen Quer- und einen Längsschnitt zweier Ausführungsbeispiele des unteren Hubstangenlagers.

### Beschreibung des Ausführungsbeispieles

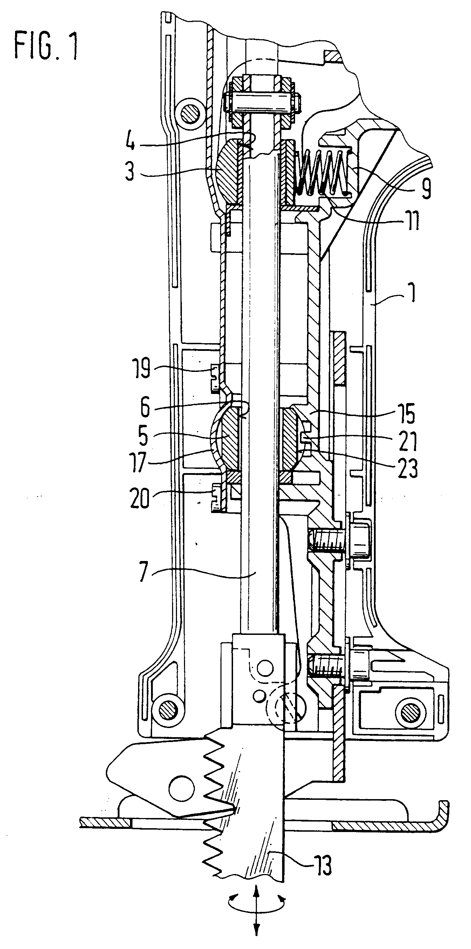

In Figur 1 ist ein Gehäuse 1 einer nicht im einzelnen dargestellten Pendelhubsäge gezeigt. Im Gehäuse 1 sitzen ein oberes Hubstangenlager 3 und ein unteres Hubstangenlager 5. Das obere Hubstangenlager 3 hat eine Kreiszylinderbohrung 4, die die obere Hubstangenführung für eine Hubstange 7 bildet. Das untere Hubstangenlager 5 hat eine Langlochbohrung 6, die die untere Hubstangenführung für die Hubstange 7 bildet.

Das obere Hubstangenlager 3 ist normal zur Achse der Kreiszylinderbohrung 4 in Vorschubrichtung bewegbar gelagert und mit einer nicht im einzelnen dargestellten Pendelmechanik 9 mit Pendelfeder 11 gekoppelt. Die Hubstange 7 trägt an ihrem unteren freien Ende ein Sägeblatt 13.

Das untere Hubstangenlager 5 kann aufgrund seiner äußeren Kugelform in jeder Position arretiert und dabei günstig so justiert werden, daß die Längserstreckung der Langlochbohrung 6 genau in der Pendelebene verläuft. Das untere Hubstangenlager 5 sitzt in einem Getriebegehäuse 15. Ein Deckel 17 ist mittels zweier Schrauben 19, 20 am Getriebegehäuse 15 gehalten und hält das untere Hubstangenlager 5 in dessen Sitzposition. Auf der dem Deckel 17 gegenüberliegenden Seite greift ein Führungszapfen 21 des Getriebegehäuses 15 in einen Führungsschlitz 23 des unteren Hubstangenlagers 5.

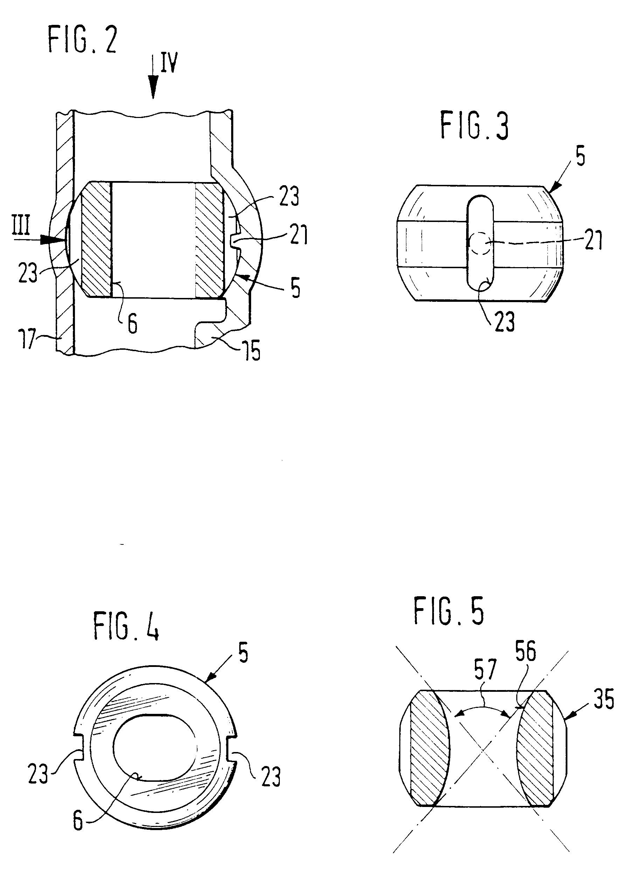

Die Figur 2 zeigt das untere Hubstangenlager 5 ohne Hubstange 7, im übrigen jedoch wie zu Figur 1 beschrieben. Die Figur 3 ergibt sich bei Betrachtung der Figur 2 aus Richtung III. Die Figuren 2 und 3 verdeutlichen, wie ein Führungszapfen 21 des Getriebegehäuses 15 in einen der zwei Führungsschlitze 23 des unteren Hubstangenlagers 5 greift. Die Führungsschlitze 23 sind so angeordnet, daß sie mit der Längserstreckung der Langlochbohrung 6 fluchten.

Mittels der außen am Hubstangenlager 5 eingefrästen bzw. anderweitig eingeformten, beidseitigen Führungsschlitze 23 und des Führungszapfens 21 im Getriebegehäuse 15 ist die Einbaugenauigkeit des Hubstangenlagers 5 bzw. die Justierlage der Langlochbohrung 6 zur Vorschubrichtung bzw. parallel zur Pendelebene zwingend gesichert, weil der Führungszapfen 21 den Führungsschlitz 23 und damit die Längserstrekkung der Langlochbohrung 6 exakt in die Pendelebene der Hubstange 7 positioniert, wobei die verlängerte Achse des Führungszapfens 21 durch das Zentrum der Lager-Außenform des Lagers 5 verläuft. Die doppelte Anordnung der Führungsschlitze 23 erleichtert die Montage des Hubstangenlagers 5 bezüglich dem Führungszapfen 23, weil damit zum Herstellen der korrekten Montageposition stets zwei Möglichkeiten bestehen, von denen dann die jeweils günstigere ausgewählt werden kann.

In Figur 4 ist eine Draufsicht des unteren Hubstangenlagers 5 entsprechend den Figuren 2 oder 3 aus Richtung IV gezeigt, die verdeutlicht, daß die Hubstangenführung als Langlochbohrung 6 ausgestaltet ist. Die Langlochbohrung 6 wirkt endseitig ihrer Längserstreckung als Anschlag zur Begrenzung der Pendelschwingung und als Gleitfläche der Hubstange 7, deren Drehpunkt in der Mitte der Langlochbohrung liegt.

In Figur 5 ist ein entsprechend der Figur 2 weiterentwickeltes Ausführungsbeispiel gezeigt, bei dem die Langlochbohrung 56 des unteren Hubstangenlagers 35 auf beiden Seiten trichterartig erweitert ist. Der Trichterwinkel 57 im Schnitt der Längserstreckung ist dabei etwa so groß wie der vorgesehene, größte Schwenkwinkel der Hubstange. Dadurch ist die Hubstange im unteren Hubstangenlager 35 in ihren Endlagen besonders großflächig und verschleißfest geführt.

Beim Ingangsetzen des Antriebes der Pendelhubsäge bewegt sich die Hubstange 7 sowohl in vertikaler Richtung als auch pendelnd in einer von der Achse der Hubstange 7 und der Vorschubrichtung aufgespannten Pendelebene hin und her. Bei der Hubbewegung wird der vom Sägeblatt 13 abgewandte obere Teil der Hubstange 7 von der kreiszylindrischen Bohrung 4 des Hubstangenlagers 3 konzentrisch umgriffen und spielfrei geführt. Dabei wird über die Pendelmechanik 9 und die Pendelfeder 11 die Pendelbewegung auf das obere Hubstangenlager 3 und damit auf einen Hubbereich der Hubstange 7 übertragen.

Im unteren Hubstangenlager 5, 35 führt die Hubstange 7 axiale, gleitende Hin- und Herbewegungen aus bei gleichzeitigem Hin- und Herpendeln bzw. Schwenken um den Drehpunkt der Hubstange 7 in Vorschubrichtung. Zu diesem Zweck ist, wie schon vorstehend gesagt, die untere Hubstangenführung als Langlochbohrung 6, 56 ausgestaltet, die die Hubstange 7 in Längsrichtung mit einem Sollspiel pendeln bzw. schwenken läßt, jedoch querspielfrei führt. Die Hubstange 7 kann also einen vorbestimmten Pendelhub ausführen, ohne daß ein Querspiel der Hubstange 7 den vom Sägeblatt 13 erzeugten Schnittkanal verbreitert oder das "Verlaufen" des Sägeblattes 13 begünstigt. Der Schnitt wird sauberer, wobei entweder ein schnellerer Vorschub als mit den bisherigen Pendelhubsägen möglich ist bzw. mit spürbar geringerer Vorschubkraft als bisher gearbeitet werden kann. Außerdem wird die Feinfühligkeit der Pendelhubsägen verbessert. Der größte Vorteil ist jedoch, daß das Sägeblatt 13 bzw. die Hubstange 7 weniger Querspiel hat und damit eine wesentlich bessere Schnitt-Treue entsteht, d.h. ein "Verlaufen" des Sägeblattes 13 wird wesentlich erschwert.

Das dargestellte untere Hubstangenlager 5, 35 ist für Stichsägen, Motor-Fuchsschwänze und dergl. geeignet.

## Patentansprüche

1. Pendelhubsäge mit einer der Arbeitsbewegung ihres Sägeblattes (13) überlagerten Pendelbewegung, bei der eine das Sägeblatt (13) tragende, pendelnd geführte Hubstange (7) in einer Bohrung (4, 6) eines Hubstangenlagers (3, 5, 35) mit erweitertem Spiel geführt ist, dadurch gekennzeichnet, daß die Hubstange (7) in ihrer Pendelebene querspielfrei geführt ist, indem das untere Hubstangenlager (5, 35) mit einer Langlochbohrung (6) versehen ist, deren Längserstreckung parallel zur Pendelebene ausgerichtet ist.

2. Pendelhubsäge nach Anspruch 1, dadurch gekennzeichnet, daß das Hubstangenlager (5) außen einen zur Längserstreckung der Langlochbohrung (6) ausgerichteten, vorzugsweise parallelen Führungsschlitz (23) trägt.

3. Pendelhubsäge nach Anspruch 1 und 2, dadurch gekennzeichnet, daß ein Führungszapfen (21) in den Führungsschlitz (23) ragt und damit die Lage des Hubstangenlagers (5) bestimmt.

4. Pendelhubsäge nach Anspruch 3, dadurch gekennzeichnet, daß das Profil der Langlochbohrung (6, 56) insbesondere an ihrer Längserstreckung von beiden Seiten der Bohrung her trichterförmig ist.

## Claims

1. Swing jigsaw having a swinging movement superimposed on the working movement of its saw blade (13), in which a swingingly guided lifting rod (7) carrying the saw blade (13) is guided with enlarged play in a bore (4, 6) of a lifting rod bearing (3, 5, 35), characterized in that the lifting rod (7) is guided without transverse play in the plane of its swing owing to the fact that the bottom lifting rod bearing (5, 35) is provided with an elongated hole bore (6) whose longitudinal extent is aligned parallel to the plane of the swing.

2. Swing jigsaw according to Claim 1, characterized in that the lifting rod bearing (5) carries on the outside a guide slot (23) aligned, preferably parallel, relative to the longitudinal extent of the elongated hole bore (6).

3. Swing jigsaw according to Claim 1 or 2, characterized in that a guide pin (21) projects into the guide slot (23) and thus fixes the position of the lifting rod bearing (5).

4. Swing jigsaw according to Claim 3, characterized in that the profile of the elongated hole bore (6, 56) is, particularly in its longitudinal extent, funnel-shaped from both sides of the bore.

## Revendications

1. Scie sauteuse à mouvement alternatif et oscillant , avec un mouvement oscillant superposé au mouvement de travail de la lame de scie (13), dans le cas duquel une tige (7) qui porte la lame de scie (13) et qui est guidée de façon à pouvoir osciller, est guidée dans un alésage (4, 6) d'un palier de tige (3, 5, 35) avec un jeu élargi, scie sauteuse à mouvement alternatif et oscillant caractérisée en ce que la tige (7) est guidée sans jeu dans le sens transversal dans son plan d'oscillation, tandis que le palier inférieur de la tige (5, 35) est pourvu d'un alésage (6) en forme de trou oblong, dont l'étendue longitudinale est orientée parallèlement au plan d'oscillation.

2. Scie sauteuse à mouvement alternatif et oscillant selon la revendication 1, caractérisée en ce que le palier de tige (5) porte à l'extérieur une fente de guidage (23) orientée dans le sens de l'étendue longitudinale de l'alésage (6) en forme de trou oblong, et de préférence parallèlement à celle-ci.

3. Soie sauteuse à mouvement alternatif et oscillant selon les revendications 1 et 2, caractérisée en ce qu'un téton de guidage (21) pénètre dans la fente de guidage (23) et détermine de cette façon la position du palier de la tige (5).

4. Scie sauteuse à mouvement alternatif et oscillant selon la revendication 3, caractérisée en ce que le profil de l'alésage en forme de trou oblong (6, 56) a une forme d'entonnoir en particulier dans son étendue longitudinale à partir des deux côtés de l'alésage.
